# EUROPEAN PATENT SPECIFICATION

(11) **EP 2 452 300 B1**
(45) Date of publication and mention of the grant of the patent: **25.03.2015**
(21) Application number: 10742584.5
(22) Date of filing: 08.07.2010
(51) Int. Cl.: G06Q 20/32, G07F 7/10, G06Q 20/34

(54) **METHOD AND SYSTEM OF CONTACTLESS AUTHENTICATION, AND CARRIER OF PIN CODE**
VERFAHREN UND SYSTEM ZUR DRAHTLOSEN AUTHENTIFIZIERUNG, UND TRÄGERELEMENT FÜR EINEN PIN CODE
PROCÉDÉ ET SYSTÈME POUR AUTHENTIFICATION SANS FILS, ET SUPPORT POUR UN CODE PIN

(30) Priority: 08.07.2009 SK 500352009
(43) Date of publication of application: 16.05.2012
(73) Proprietor: Logomotion, s.r.o., 921 01 Piestany (SK)
(72) Inventor: HUBINÁK, Emil, 921 01 Pie any (SK); FLOREK, Miroslav, 821 01 Bratislava (SK); MASARYK, Michal, 821 01 Bratislava (SK)
(74) Representative: Porubcan, Róbert
(86) International application number: PCT/IB2010/053130
(87) International publication number: WO 2011/004339

(56) References cited:
- EP-A2- 1 798 867
- WO-A1-2009/087539
- US-A1- 2008 155 258
- US-A1- 2009 108 063
- SMART CARD ALLIANCE: "Proximity Mobile Payments: Leveraging NFC and the Contactless Financial Payments Infrastructure A Smart Card Alliance Contactless Payments Council White Paper", INTERNET CITATION, 1 September 2007 (2007-09-01), page COMPLETE, XP007906262, Retrieved from the Internet: URL:http://www.smartcardalliance.org [retrieved on 2008-11-07]
- "EMV Mobile Contactless Payment: Technical Issues and Position Paper", INTERNET CITATION, 1 October 2007 (2007-10-01), pages 1-37, XP007908266, Retrieved from the Internet: URL:http://www.emvco.com/mobile.aspx [retrieved on 2009-04-20]
- "NFC Forum: Frequently asked questions", INTERNET CITATION, 1 January 2007 (2007-01-01), pages 1-5, XP007906261, Retrieved from the Internet: URL:http://www.nfc-forum.org/home [retrieved on 2008-11-07]
- SMART CARD ALLIANCE IDENTITY COUNCIL: "RF-Enabled Applications and Technology: Comparing and Contrasting RFID and RF-Enabled Smart Cards", INTERNET CITATION, 1 January 2007 (2007-01-01), pages 1-7, XP007906278, Retrieved from the Internet: URL:http://www.smartcardalliance.org/resou rces/pdf/RFID_vs_RF-Enabled_Sma rt_Cards.pdf [retrieved on 2008-11-07]

## Description

### Technology

The invention refers to a method and system of the authorized person authentication and approval of the operation, especially during contactless payment through a separate carrier of the PIN (personal identification number) code. The invention also refers to the identifier, which serve as a secured carrier of the PIN code to the payment process.

### Present technology

Payment cards are used widely during contactless payments, in which the approval with the payment is realized by presenting and entering of the correct PIN code. The buyer enters the PIN code into the payment terminal, usually over a small keyboard and by doing this the payment is confirmed. In case of using magnetic, chip or contactless cards during payment and also in case of payments over mobile phones the buyers are authenticated using the PIN code.

There are known several methods and technical devices by which the manual entering of PIN in the mobile phones is supplemented with and by which the approval of the contactless payments is expressed. For example, according to the published patent application WO 2005/086456 A1 the RFID (Radio-frequency identification) chip in a small separate mobile card is used. The RFID technology is described also by the patents and patent applications EP 1 536 573 A2, CN 1627321 25 A, KR20040060249, WO 2007/136939 A2, WO 2006/009460 A1. However, the RFID chip developed above all for the applications with lower level of securities such as for example those for monitoring the movement of pallets in the warehouse, processing of releases and reception of goods etc. The RFID system operate even on long distances e.g. hundred feet to 100 meters, which is dangerous in case of sensitive data. The RFID technology does not enable active and secure encryption without contactless connection of the RFID identifier to the power source or without the usage of its own source of electrical energy e.g. in the form of battery. The usage of NFC (Near Field Communication) technology is also known as in the patents and patent applications EP 1 729 253 A1, DE 10 2006 019 628 A1, CN 1835007 A, however there is no solution known, in which a passive identifier would be used, without its own source of electrical energy and where the identifier would realize the encryption tasks on its own.

The patent application publication no. US 2009/0108063 A1 discloses a system and method for wirelessly communicating Radio Frequency (RF) signals with retail terminals, using an antenna, a card element and a mobile device.

In case of passive identifiers being used, the methods and solutions known until now did not enable to ensure high level of security that would be sufficient enough, since the passive identifiers can be copied easily and are easily imitable. On the other hand the active identifiers required its own source of powering that would be capable of supplying the identifier's hardware with the energy necessary for the encryption of the approval code, or they required to be connected in a contact way with a communication device in order to be supplied with energy. In both cases it is a solution that is uncomfortable and lengthy. Until now, the configurations of RFID tags and RFID chips were considered to be not sufficiently secure carriers of the sensitive information.

### The subject matter of the invention

The invention is defined by independent claims 1, 3 and 5. The deficiencies mentioned are to a great extent eliminated by the method of authentication over PIN code located in a separate identifier during a cashless payment that is realized over the payment terminal having a contactless communication channel between the payment terminal and the identifier according to this invention. The subject matter of this invention is in the fact that a unique identification file containing the data about the current payment is sent from the payment terminal to the distance of 10 cm into the identifier being put to the payment terminal within the distance that is lower than 10 cm. The usage of the small distance to which the identifier file, which is also a request command, is sent over the radio channel, is important in order to prevent interference and to increase the security level. Even though this can be realized directly over a physical tap of the identifier to the payment terminal reader, the tap itself nor the exact location of the tap is required or inevitable since the communication between the payment terminal and the identifier is a radio communication.

The important characteristic of the solution presented is the fact that the identifier is supplied with energy in a contactless way over the payment terminal's electromagnetic field, where the identifier used direct energy and/or the energy of the payment terminal's electromagnetic field that was accumulated during the tap. The PIN code is assigned to the received identification file in the identifier's processor. The resulting file is signed electronically over the private key that is stored in the identifier's memory and the electronically signed file created in this way is then encrypted, enciphered and sent to the payment terminal over which is this file sent to the payment processing centre for the PIN code's correctness to be verified. The electronically signed file is encrypted in the identifier's processor before being sent from the identifier.

The received file is decrypted in the payment processing centre and then it is read using a public key; the PIN code is extracted from the file received and then it is compared with the correct value

The invention enables the usage of the encryption of the authentication, while the energetic passivity of the separate identifier is retained. The main advantage is the high security while retaining the user comfort. According to this invention, the entering of PIN, which usually is of 4 digits is supplemented by tapping the identifier to the POS (Point of sale) terminal. An encrypted information with a multibit string is sent from the identifier. The multibit string is not constant, since the file that is sent from the identifier into the payment terminal is changed in accordance with the encryption that is realized in the identifier's processor during each authentication process.

By this a higher level of security is reached in comparison to the one in case of current identifiers and in the same time the advantage of their passivity is retained. It is exactly the energetic passivity that enables to decrease the size of the identifier, since the necessity to use its own source of energy falls off. Also, the user comfort is increased, the user does not have to take care of charging the identifier or its capacity.

The subject matter of this invention also lies in the system for the authentication during cashless payments, which encompasses a payment terminal, a separate identifier communicating with the payment terminal over the contactless communication channel, where the identifier encompasses a processor for the electronic signature of the file. Further on, the identifier contains an emitting and receiving signal for the communication with the payment terminal, an electromagnetic field transformation block for the electric energy and a memory with a secured part, in which the PIN code is stored. At least one part of the memory is in the form of a secure element. The identifier's elements are supplied with energy over the payment terminal's electromagnetic field, or partially also by the energy that is accumulated during the tap of the identifier to the payment terminal during the corresponding payment operation.

From the compatibility with existing, mass-spread devices and standards point of view, it is suitable if the payment terminal has a NFC communication element and the identifier has the NFC platform communication element.

The deficiencies mentioned in current state of the technology are to a great extent eliminated by the identifier which communicates with the payment terminal in contactless way during cashless payments according to this invention. The subject matter of this invention lies in the fact that it contains a processor for electronic signatures and processing of the file received, an emitting and receiving element for the communication with the payment terminal. Further, the identifier contains a memory and electromagnetic field transformation block for the electric energy. The emitting and receiving element and the electromagnetic field transformation block for the electric energy are connected with the processor. The processor is also connected with the memory. It is suitable if at least one part of the memory is in the form of a secure element. The user's PIN code and the private key for electronic signature are stored in the secure part of the memory. Basically, all the elements of the identifier are powered with energy by the payment terminal's electromagnetic field.

In optimal configuration the identity and/or approval identifier encompasses a NFC chip. The utility characteristics of the identifier are increased by a configuration, where one part of the memory is reserved for the user's personal data. This part of the memory is adjusted for a separate storage of personal data from the private key. That being the case, the identifier can also serve as a health card, identity card and similar. The legitimacy of requesting these data is evaluated in the identifier's processor.

In order to increase the user comfort, the identifier can be placed into a pendant and/or key case and/or a sticker and/or applique.

The invention enables to increase security and comfort of the authentication and approval of the cashless payment and the user does not have to remember the PIN code. In the same time, the invention accelerates the course of the cashless payment operation, since the delay created by entering the PIN code is smaller.

### Pictures overview

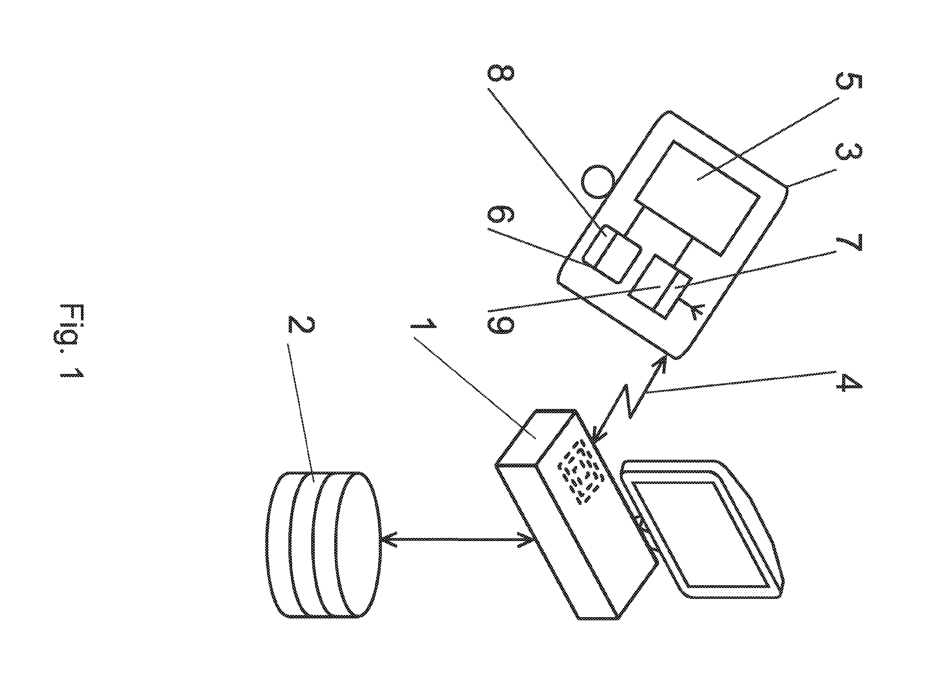

The invention is described in more detail on the figure 1, where there is a scheme of the connection between the payment terminal and the identifier during the cashless payment process.

### Realization examples

In this example the system contains a payment terminal 1 at the shop's cash desk, an identifier 3 in a key case and remote payment processing centre 2. The payment terminal 1 is equipped with a NFC communication technology, which enables the creation of a contactless communication channel 4 with the identifier 3. Otherwise it is a standard payment terminal 1 with common functionalities and a communication with the payment processor centre's 2 server in a bank institution or in a similar authorization centre.

In case of cashless payment realized over the payment terminal 1, in the phase when the authorization of the payment is requested, the identification file starts to be emitted from the payment terminal 1 to the distance lower than 10 cm. This identification file contains the data on the current payment including the generated PAN (primary account number). After the payment customer receives instructions from the payment terminal 1 attendee, the paying customer taps the identifier 3 to the payment terminal 1 and he does it in such a way that he taps the identifier to the marked field of the payment terminal 1, to the place, where the NFC reader is located.

After tapping, the identifier 3 is supplied with the energy in a contactless way by the electromagnetic field of the payment terminal 1. The identifier 3 does not have its own source of energy (e.g. a battery) and uses the payment terminal's 1 electromagnetic field as a source of energy. The payment terminal's 1 electromagnetic field is processed in the transformation block 9. The identifier 3 receives the emitted file with the PAN code and in the configuration according to this invention realizes pairing of the payment device - identifier pair. In case of affirmative result, the PIN code is assigned to the received identification file in the identifier's 3 processor 5 and the resulting file is electronically signed using the private key that is stored in the identifier's 3 memory 6. The electronically signed file thus created is encrypted and subsequently is sent to the payment terminal 1, over which is this file transferred into the payment processing centre 2 for the verification of the PIN code and realization of the payment.

By receiving the correct, electronically signed file with a correct PIN code from the identifier 3, the payment application assumes that the user approved the payment and that the user is authorized to do that. The verification of the correctness lies basically in the fact that the electronically signed file with the PIN code was read using a corresponding public key.

The identifier 3 containing a processor 5 and recordable memory 6 with exempt secure element for the storage of the PIN code, is capable of realizing computing operations enabling encryption, decryption and other tasks necessary for the realization of the electronic signature. The identifier 3 is capable of communication with external devices, especially with the payment terminal 1 and that exclusively over radio transmission.

In this example, one part 8 of the memory 6 is reserved for the storage of the user's personal data and the identifier 3 can operate, in connection with a suitable reader of NFC chips, as an electronic identity card, health card and similar. Various types of these personal data are accessible over various levels of access rights, which are evaluated by the processor 5.

### Industrial usability

The industrial usability is obvious. According to this invention it is possible to industrially and repeatedly authenticate and approve cashless payment processes using a separate passive identifier with the PIN code.

According to this invention it is also possible to produce and use passive identifier's, especially using the NFC chip standard, the powering of which it is possible to ensure by the mobile communication device's electromagnetic field according to this invention.

### LIST OF RELATED SYMBOLS:

1- a payment terminal
2- a payment processing centre
3- an identifier
4- a contactless communication channel
5- a processor
6- a memory
7- an emitting and receiving element
8- a part of the memory for personal data
9- a transformation block

PIN - personal identification number
RFID - Radio-frequency identification
NFC - Near Field Communication
POS - Point of sale
PAN - primary account number

## Claims

1. A method of PIN entering on a payment terminal to confirm cashless payment, in the phase when the authorization of the payment is requested,
where
the PIN entering is realized over a contactless communication channel (4),
the payment terminal (1) is connected with a payment processor center (2),
a separate identifier (3) with a secure element, in which the PIN code and even a private key is stored, is used;
the identifier (3) is supplied with energy in a contactless way over the payment terminal's (1) electromagnetic field, when the direct energy and/or the energy accumulated during the tap of the identifier (3) to the payment terminal (1) is used in the identifier (3)
wherein
an unique identification file containing the data on the current payment including a PAN primary account number is sent from the payment terminal (1) to the distance lower than 10 cm into the identifier (3),
after a customer receives instructions from the payment terminal (1) attendee, separate identifier (3) is tapped to the payment terminal (1); the identifier (3) is put to the payment terminal (1) within a distance that is lower than 10 cm;
the identifier (3) receives the emitted file with the PAN,
the PIN code is loaded from the secure element and it is assigned to the received identification file in the identifier's (3) processor (5),
the resulting file is electronically signed using the private key that is stored in the identifier's (3) memory (6) and an electronically signed file thus created is encrypted and subsequently sent into the payment terminal (1), over which it is transferred into the payment processing centre (2),
the received file is decrypted in the payment processing centre (2) and then it is read using a public key; the PIN code is extracted from the file received and then verified.

2. The method of authentication as in claim 1 wherein before the PIN code is added to the received identification file, a check of the pair payment device - identifier (3) pertinence is realized.

3. A system for the entry of a PIN code into a payment terminal (1) for the execution of the method from any of the claims 1 or 2, in which the system encompasses a payment terminal (1) and a separate identifier (3) communicating with the payment terminal (1) over a contactless communication channel (4), where the payment terminal (1) is connected to a payment processing centre (2) wherein the payment terminal (1) is equipped by an emitting and receiving element (7) for the contactless communication with the identifier (3); the identifier (3) encompasses a processor (5), the emitting and receiving element (7) for the communication with the payment terminal (1), an electromagnetic field transformation block (9) for electric energy, a memory (6) with a secured part, in which the PIN code is stored; these identifier's (3) elements are supplied with energy from the payment terminal's (1) electromagnetic field.

4. A system for the entry of a PIN code into a payment terminal (1) as in claim 3 wherein the identifier (3) contains a NFC communication element.

5. A carrier of a PIN code, which is entered to a payment terminal (1) for the execution of the method from any of the claims which consists of an identifier (3), which contains a processor (5) for electronic processing of the received file including encryption and electronic signature of the files, an emitting and receiving element (7) for the communication with the payment terminal (1), a memory (6) with the secure element, an electromagnetic field transformation block (9) for electric energy; where the emitting and receiving element (7) and electromagnetic field transformation block (9) for electric energy are connected with the processor (5), which is also connected to the memory (6); the identifier's (3) elements are supplied with energy from the payment terminal's (1) electromagnetic field and the user's PIN code and the private key for electronic signature are stored in the secured part of the memory (6).

6. The carrier as in claim 5 wherein the emitting and receiving element (7) has an NFC platform.

7. The carrier as in any of the claims 5 or 6 wherein at least one part (8) of the memory (6) is adjusted in such a way that the user's personal data can be stored separately; this part is accessible from the outside over the emitting and receiving element (7) through processing in the processor (5).

8. The carrier as in any of the claims 5 to 7 is located in a pendant and/or a key case and/or a sticker and/or an appliqué.

## Patentansprüche

1. Eine Methode der PIN-Eingabe auf einem Zahlungsterminal zur Bestätigung einer bargeldlosen Zahlung in der Phase, in der die Autorisierung der Zahlung verlangt wird,
wo
die PIN-Eingabe über einen kontaktlosen Kommunikationskanal (4) realisiert wird,
der Zahlungsterminal (1) mit einem Zahlungsverarbeitungszentrum (2) verbunden ist,
eine separate Identifikationsvorrichtung (3) mit einem Secure Element, in dem der PIN-Code und sogar ein privater Schlüssel gespeichert wird, benutzt wird;
die Identifikationsvorrichtung (3) kontaktlos über das elektromagnetische Feld des Zahlungsterminals (1) mit Energie versorgt wird, wenn die direkte Energie und/oder die während des Tippens der Identifikationsvorrichtung (3) auf den Zahlungsterminal (1) angesammelte Energie in der Identifikationsvorrichtung (3) benutzt wird
wobei
eine eindeutige Kennungsdatei, die Daten über die aktuelle Zahlung einschließlich den Kontonummer (PAN) enthält, aus dem Zahlungsterminal (1) auf weniger als 10 cm Entfernung in die Identifikationsvorrichtung (3) gesendet wird,
nachdem ein Kunde Anweisungen vom Bediener des Zahlungsterminals (1) erhält, die Identifikationsvorrichtung (3) auf den Zahlungsterminal (1) getippt wird; die Identifikationsvorrichtung (3) auf den Zahlungsterminal (1) innerhalb von einer Entfernung weniger als 10 cm angelegt wird;
die Identifikationsvorrichtung (3) die gesendete Datei mit der PAN erhält,
der PIN-Code aus dem Secure Element geladen und zur empfangenen Kennungsdatei im Prozessor (5) der Identifikationsvorrichtung (3) zugewiesen wird,
die resultierende Datei mit Hilfe des privaten Schlüssels, der im Speicher (6) der Identifikationsvorrichtung (3) gespeichert ist, elektronisch signiert wird und eine so erstellte Datei verschlüsselt und anschließend in den Zahlungsterminal (1) gesendet wird, über den sie in das Zahlungsverarbeitungszentrum (2) übertragen wird,
die empfangene Datei im Zahlungsverarbeitungszentrum (2) entschlüsselt und dann mit Hilfe eines öffentlichen Schlüssels gelesen wird; der PIN-Code aus der empfangenen Datei ausgelesen und dann überprüft wird.

2. Die Authentifizierungsmethode nach Anspruch 1, wobei bevor der PIN-Code zur empfangenen Kennungsdatei hinzugefügt wird, ein Überprüfen des Paares das Zahlungsmittel und der Identifikationsvorrichtung (3) durchgeführt wird.

3. Ein System für die Eingabe des PIN-Codes in einen Zahlungsterminal (1) zur Ausführung der Methode nach Anspruch 1 oder 2, bei der das System einen Zahlungsterminal (1) und eine mit dem Zahlungsterminal (1) über einen kontaktlosen Kommunikationskanal (4) kommunizierende Identifikationsvorrichtung (3) umfasst, wo der Zahlungsterminal (1) mit dem Zahlungsverarbeitungszentrum (2) verbunden ist wobei der Zahlungsterminal (1) mit einem Sende- und Empfangselement (7) für kontaktlose Kommunikation mit der Identifikationsvorrichtung (3) ausgestattet ist; die Identifikationsvorrichtung (3) umfasst einen Prozessor (5), das Sende- und Empfangselement (7) zur Kommunikation mit dem Zahlungsterminal (1), einen Block zur Transformation des elektromagnetischen Feldes (9) für elektrische Energie, einen Speicher (6) mit einem gesicherten Teil, in dem der PIN-Code gespeichert ist; diese Elemente der Identifikationsvorrichtung (3) werden aus dem elektromagnetischen Feld des Zahlungsterminals (1) mit Energie versorgt.

4. Ein System für die Eingabe des PIN-Codes in einen Zahlungsterminal (1) nach Anspruch 3, wobei die Identifikationsvorrichtung (3) ein NFC-Kommunikationselement enthält.

5. Ein Träger des PIN-Codes, der in einen Zahlungsterminal (1) eingegeben wird, zur Ausführung der Methode nach einem der vorangehenden Ansprüche, d i e besteht aus einer Identifikationsvorrichtung (3), die einen Prozessor (5) zur elektronischen Verarbeitung der empfangenen Datei enthält, einschließlich der Verschlüsselung und der elektronischen Signatur der Dateien, Sende- und Empfangselement (7) zur Kommunikation mit dem Zahlungsterminal (1), einem Speicher (6) mit dem Secure Element, einen Block zur Transformation des elektromagnetischen Feldes (9) für elektrische Energie; wo das Sende- und Empfangselement (7) und der Block zur Transformation des elektromagnetischen Feldes (9) für elektrische Energie mit dem Prozessor (5) verbunden ist, der auch mit dem Speicher (6) verbunden ist; die Elemente der Identifikationsvorrichtung (3) werden aus dem elektromagnetischen Feld des Zahlungsterminals (1) mit Energie versorgt und der PIN-Code des Benutzers und der private Schlüssel für die elektronische Signatur sind im gesicherten Teil des Speichers (6) gespeichert.

6. Der Träger nach Anspruch 5, wobei das Sende- und Empfangselement (7) eine NFC-Plattform hat.

7. Der Träger nach Anspruch 5 oder 6, wobei mindestens ein Teil (8) des Speichers (6) so angepasst ist, dass die Personaldaten des Benutzers separat gespeichert sein können; dieser Teil ist von außen über das Sende- und Empfangselement (7) durch die Verarbeitung im Prozessor (5) zugänglich.

8. Der Träger nach einem der vorangehenden Ansprüche 5 bis 7 befindet sich in einem Anhänger und/oder einem Schlüsseletui und/oder einem Ankleber und/oder einer Aufnäher.

## Revendications

1. Mode de saisie du code PIN sur un terminal de paiement pour confirmer le paiement sans espèces, pendant la phase de demande d'autorisation de paiement,
où
la saisie du code PIN est réalisée par l'intermédiaire d'une chaîne de communication sans contact (4),
le terminal de paiement (1) est relié au centre de traitement des paiements (2), un identificateur séparé (3) possédant un élément sécurisé dans lequel le code PIN et même une clé privée sont stockés est utilisé ;
l'identificateur (3) est alimenté en énergie, sans contact, par l'intermédiaire du champ électromagnétique du terminal de paiement (1) lorsque l'énergie directe et/ou l'énergie accumulée en tapant l'identificateur (3) sur le terminal de paiement (1) est utilisée dans l'identificateur (3)
**sachant**
qu'un fichier unique d'identification contenant les données du paiement en cours y compris un numéro de compte primaire PAN est envoyé à partir du terminal de paiement (1) à l'identificateur (3) à une distance inférieure à 10 cm,
qu'une fois que le client a reçu les instructions du terminal de paiement (1) donné, un identifiant à part (3) est tapé sur le terminal de paiement (1) ; l'identificateur (3) est posé près du terminal de paiement (1) à une distance inférieure à 10 cm ;
que l'identificateur (3) obtient le fichier émis avec le PAN,
que le code PIN est téléchargé à partir de l'élément sécurisé et est attribué au fichier d'identification reçu dans le processeur (5) de l'identificateur (3),
que le fichier résultant est signé électroniquement au moyen de la clé privée stockée dans la mémoire (6) de l'identificateur (3) et le fichier signé électroniquement ainsi créé est chiffré et ensuite envoyé au terminal de paiement (1) par l'intermédiaire duquel il est transféré vers le centre de traitement des paiements (2),
que le fichier reçu est déchiffré au centre de traitement des paiements (2) et ensuite lu au moyen de la clé publique ; le code PIN est extrait du fichier reçu puis vérifié.

2. Mode d'autorisation tel que mentionné à la revendication n°1 : avant que le code PIN soit ajouté au fichier d'identification reçu, un contrôle de la pertinence de l'appareil de paiement pair - l'identificateur (3) est réalisé.

3. Système de saisie du code PIN sur le terminal de paiement (1) pour l'exécution de la méthode que ce soit de la revendication n°1 ou de la revendication n°2 : celui-ci inclut un terminal de paiement (1) et un identificateur séparé (3) communiquant avec le terminal de paiement (1) par l'intermédiaire d'une chaîne de communication sans contact (4) de telle sorte que le terminal de paiement (1) est relié au centre de traitement des paiements (2) e t où le terminal de paiement (1) est équipé d'un élément émetteur et récepteur (7) pour la communication sans contact avec l'identificateur (3) ; l'identificateur (3) comprend un processeur (5), un élément émetteur et récepteur (7) pour la communication avec le terminal de paiement (1), un bloc transformateur du champ électromagnétique (9) pour l'énergie électrique, une mémoire (6) sécurisée dans lequel le code PIN est stocké ; ces éléments de l'identificateur (3) sont alimentés en énergie à partir du champ électromagnétique du terminal de paiement (1).

4. Système d'entrée du code PIN dans le terminal de paiement (1) comme indiqué dans la revendication 3 : l'identificateur (3) contient un élément de communication NFC.

5. Porteur de code PIN entré dans le terminal de paiement (1) pour l'exécution de la méthode à partir de n'importe laquelle des revendications : ce porteur consiste en un identificateur (3) comprenant un processeur (5) pour le traitement électronique des fichiers reçus y compris le cryptage et la signature électronique des fichiers, un élément émetteur et récepteur (7) pour la communication avec le terminal de paiement (1), une mémoire (6) à élément sécurisé, un bloc tranformateur du champ électromagnétique (9) pour l'énergie électrique, où l'élément émetteur et récepteur (7) et le bloc transformateur du champ électromagnétique (9) pour l'énergie électrique sont reliés au processeur (5), lui-même relié également à la mémoire (6) ; les éléments de l'identificateur (3) sont alimentés en énergie à partir du champ électromagnétique du terminal de paiement (1) et le code PIN de l'utilisateur et la clé privée pour la signature électronique sont stockés dans la partie sécurisée de la mémoire (6).

6. Porteur tel qu'indiqué dans la revendication 5 : l'élément émetteur et récepteur (7) possède une plate-forme NFC.

7. Porteur tel qu'indiqué dans la revendication 5 ou 6 : au moins une partie (8) de la mémoire (6) est ajustée de telle sorte que les données personnelles de l'utilisateur peuvent être stockées séparément ; cette part est accessible de l'extérieur par l'intermédiaire de l'élément émetteur et récepteur (7) par traitement dans le processeur (5).

8. Porteur tel qu'indiqué dans les revendications 5 à 7 : ce porteur est situé dans un pendentif et/ou une boîte à clé et/ou un autocollant et/ou un appliqué.
